# EUROPÄISCHE PATENTANMELDUNG

(11) **EP 2 295 354 A2**
(43) Veröffentlichungstag der Anmeldung: **16.03.2011**
(21) Anmeldenummer: 10176257.3
(22) Anmeldetag: 10.09.2010
(51) Int. Cl.: B65G 57/28

(54) **Vorrichtung zum Palettieren und Transportieren von genetzten Nadelbäumen**

(30) Priorität: 11.09.2009 DE 202009012800 U
(71) Anmelder: Karlstadter Maschinen- und Anlagenbau GmbH, 97753 Karlstadt (DE)
(72) Erfinder: Die Erfindernennung liegt noch nicht vor
(74) Vertreter: Kailuweit & Uhlemann Patentanwälte

(57) **Zusammenfassung**

Die Erfindung bezieht sich auf eine Vorrichtung zum Palettieren und Transportieren von genetzten Nadelbäumen und besteht im Wesentlichen aus einem Grundrahmen (1) der eine Kippeinheit (2) trägt, die das Schwenken (2a) und Aufrichten der befüllten Palette (3) ermöglicht. Die Kippeinheit (2) weist eine Ladefläche (4) auf, die der Aufnahme der genetzten Nadelbäume dient, wobei die Ladefläche(4) mindestens zwei bewegliche oder abnehmbare Seitenwände (5) aufweist. An einer Stirnseite (6) der Ladefläche (4) sind ein oder mehrere Träger (7) mit der Kippeinheit (2) verbunden, die der Aufnahme und Fixierung der Palette (3) dienen. Weiterhin ist der Grundrahmen (1) mit einer vertikal und/oder horizontal verfahrbaren Druckeinheit (8) verbunden, die beim vertikalen Verfahren (8a) die, auf der Ladefläche (4) aufliegenden und von den aufgerichteten Seitenwänden (5) arretierten Nadelbäume komprimiert.

## Beschreibung

Die Erfindung betrifft eine Vorrichtung zum Palettieren und Transportieren von genetzten Nadelbäumen.

Christbäume werden in der Regel mehrere Wochen vor dem Weihnachtsfest eingeschlagen. Für den Transport zu den Händlern werden die einzelnen Christbäume mit einer Schlauchfolie oder einem Netz umhüllt, um Beschädigungen zu vermeiden und das Transportvolumen zu reduzieren. Der Transport der umhüllten Christbäume erfolgt lose mit konventionellen Lastkraftwagen oder in Paletten.

Nachteilig daran ist, dass die umhüllten Christbäume beim Palettentransport ein vergleichsweise großes Ladevolumen einnehmen. Erschwerend kommt hinzu, dass beim Beladen der zum Teil mannshohen Paletten die oberen Lagen ohne Hilfsmittel nur schwer erreichbar sind.

Daher gibt es Bestrebungen, Lösungen anzubieten, die die Beladung der Transportpaletten erleichtern und das notwendige Ladevolumen zu reduzieren.

Aus dem Stand der Technik sind hydraulische Pressvorrichtungen bekannt, mit deren Hilfe das Verpackungsvolumen der lose in einer Palette eingelegten Christbäume komprimiert wird. Derartige Anlagen sind als stationäre Anlagen, zum Beispiel in Forstbetrieben oder als mobile Vorrichtungen bekannt.

So bietet die Fa. Herbert Grote Verpackungstechnik, Schmallenberg, eine Weihnachtsbaum-Palettiermaschine an, die aus einem Grundrahmen, einer Stirnwand und zwei begrenzenden Seitenwänden besteht. Auf dem Grundrahmen oder an der Stirnwand der Vorrichtung sind Einwegpaletten aus Holz einlegbar.

Auf die Einwegpalette werden dann lagenweise die eingenetzten Christbäume aufgelegt. Nach Einlegen der letzten Lage wird über einen hydraulischen Pressarm der Paletteninhalt auf etwa 60 % komprimiert. Nach Erreichen dieser Endlage werden die zusammen-gepressten Christbäume in dieser Lage fixiert. Dazu werden an sich bekannte Einweg-Spannmittel (Gurtbänder) oder eine Holzlattenkonstruktion verwendet, die die verpackten Christbäume kubisch umschließen.

Nachteil dieser Lösung ist, dass das Einlegen der Christbäume in den oberen Lagen durch die Über-Kopf-Arbeit sehr kräftezehrend ist.

Ein weiterer Nachteil besteht darin, dass die eingeschlagenen Christbäume über längere Zeiträume, in der Regel mehrere Wochen, während des Transportes und der Zwischenlagerung bis zum Verkauf in dieser liegenden Position verbleiben. Aufgrund der Schwerkraft kommt es zu unerwünschten Verformungen der Äste.

Aufgabe der Erfindung ist es, die Nachteile des bekannten Standes der Technik zu beseitigen und eine Vorrichtung zum Palettieren und Transportieren von genetzten Nadelbäumen vorzuschlagen, die eine bessere Ausnutzung des vorhandenen Ladevolumens ermöglicht, das Bestücken der Paletten erleichtert und eine schonendere Behandlung der Christbäume sicherstellt.

Erfindungsgemäß wird die Aufgabe gelöst durch die Merkmale des Schutzanspruchs 1. Vorzugsweise Weiterbildungen sind Gegenstand der rückbezogenen Unteransprüche.

Die erfindungsgemäße Vorrichtung zum Palettieren und Transportieren von genetzten Nadelbäumen besteht aus einem Grundrahmen, der eine Kippeinheit trägt. Die Kippeinheit ermöglicht das Schwenken und Aufrichten der befüllten Transportpalette.

Die Kippeinheit besteht aus einer Ladefläche, die der Aufnahme der genetzten Christbäume dient. Am Boden der Ladefläche befinden sich vorzugsweise Ausnehmungen, in die Holzlatten oder Spannbänder einlegbar sind. Auf die Latten oder Spannbänder am Boden der Ladefläche werden lagenweise die eingenetzten Christbäume eingelegt. Zur seitlichen Fixierung dienen bewegliche Seitenwände, die während der Beladung weggeschwenkt, geklappt oder abgenommen werden können. Die Seitenwände sind an mehreren Punkten mit der Ladefläche verbunden. Die Seitenwände weisen vorteilhaft eine Höhe von 700 mm bis 1500 mm auf, so dass die Beladung der Palette bei aufgerichteten Seitenwänden problemlos auch für kleinere Personen und ohne Einnahme von Zwangspositionen (Über-Kopf-Arbeiten) möglich ist.

An einer Stirnseite der Vorrichtung sind ein oder mehrere Träger mit der Kippeinheit verbunden. Diese Träger dienen der Aufnahme und Fixierung einer Palette, vorzugsweise einer Einwegpalette aus Holz, Holzwerkstoffen oder Recyclingmaterial, die sich während der Beladung in einer senkrechten Position befinden.

Vorzugsweise sind die Träger lösbar mit der Kippeinheit verbunden, um die Vorrichtung bei Bedarf an die geänderte Form oder Größe einer Palette anpassen zu können.

Der Grundrahmen ist bevorzugt als L-förmige Schweißkonstruktion ausgeführt. Der waagerechte Teil des Grundrahmens besteht im Wesentlichen aus zwei Längsträgern.

Die Längsträger sind durch mehrere Querträger miteinander verbunden und dadurch ausgesteift. In einer bevorzugten Ausgestaltung sind die Querträger als Hohlprofile ausgestaltet, in deren Hohlräumen kleinere Profile eingebettet sind. Diese teleskopierbaren Profile nehmen an ihren äußeren Enden die Seitenwände auf. Durch das ein- oder beidseitige Ausziehen der Profile kann der Abstand der beiden Seitenwände variiert und an die Länge der zu verladenden Christbäume angepasst werden. Dadurch wird eine Optimierung des Ladevolumens erreicht und ein Verrutschen des Ladegutes vermieden.

Die Kippeinheit ist an den äußeren Enden der Längsträger schwenkbar gelagert. Das Aufrichten der in der Kippeinheit fixierten Palette geschieht durch mindestens einen, zwischen den Längsträgern angeordneten Hydraulikzylinder.

Den senkrechten Teil des L-förmigen Grundrahmens bildet ein Tragwerk, an dem eine vertikal und/oder horizontal verfahrbare Druckeinheit angeordnet ist. Die Druckeinheit besteht im Wesentlichen aus einem geschlossenen Pressrahmen, dessen Spannbereich etwa der Ladefläche der Kippeinheit entspricht. Die horizontale und vertikale Verfahrbarkeit der Druckeinheit wird durch Hydraulikzylinder realisiert, die den senkrechten Teil des L-förmigen Grundrahmens mit dem Pressrahmen verbinden. Durch das vertikale Verfahren des Druckrahmens werden die, auf der Ladefläche aufliegenden und von den aufgerichteten Seitenwänden arretierten Christbäume komprimiert. Nach Erreichen der gewünschten Packungsdichte wird das Ladegut durch eine Holzleistenkonstruktion oder durch Spannbänder arretiert.

In einer bevorzugten Weiterbildung kann der Pressrahmen zusätzlich horizontal verfahren werden. Vorteilhaft wird der Pressrahmen als ausgesteifte Schweißkonstruktion aus Hohlprofilen ausgeführt. Im Inneren der Hohlprofile, die die Längs- und Querträger des Pressrahmens bilden, sind kleinere Profile axial verschiebbar angeordnet. Durch das teleskopartige Ausfahren der kleineren Profile kann die auskragende Länge der Längs- und Querträger des Pressrahmens bei Bedarf vergrößert und so an die gleichfalls veränderbare Geometrie und Größe der Ladefläche angepasst werden.

In einer bevorzugten Ausbildung sind die Seitenwände lösbar mit der Kippeinheit verbunden. Damit wird das Einlegen der genetzten Christbäume im bodennahen Bereich erleichtert, ohne dass eine aufgerichtete Seitenwand überwunden werden muss. Nach dem Einlegen der ersten Lagen der umhüllten Christbäume werden die Seitenwände in den Grundrahmen eingesteckt.

In einer gleichfalls bevorzugten, alternativen Ausbildung sind die Seitenwände schwenkbar an der Kippeinheit angelenkt und können mit mechanischen oder hydraulischen Mitteln in eine senkrechte Position bewegt werden. Die Seitenwände verhindern dabei ein Verrutschen der umhüllten Christbäume.

Nach dem vollständigen Befüllen der Palette und der Lagefixierung durch Spannbänder oder eine, das Ladegut arretierende Lattenverbindung wird die Kippeinheit betätigt und die Palette bis in die Senkrechte geschwenkt, so dass die beladene Palette auf dem Palettenboden ruht.

Bevorzugt weist die Ladefläche der Vorrichtung eine Länge auf, die der maximal zulässigen Ladeguthöhe des Transportmittels entspricht, mit dem die aufgerichteten Paletten transportiert werden. Dadurch wird eine optimale Ausnutzung des Transportvolumens realisiert, die Transportkosten und der spezifische Energieverbrauch minimiert und die Schadstoffbelastung reduziert.

Die erfindungsgemäße Vorrichtung kann als stationäre Einrichtung, z. B. in Baumschulen oder Forstbetrieben eingesetzt werden. Bevorzugt wird die Vorrichtung als Baugruppe in Verbindung mit einem flurgebundenen Trägerfahrzeug, wie einem Schlepper, einem Traktor oder einem schweren Gabelstapler eingesetzt. Der Antrieb und die Ansteuerung der hydraulischen Baugruppen der Vorrichtung erfolgen dabei über das Trägerfahrzeug.

In einer weiteren bevorzugten Ausführung sind an der Kippeinheit mindestens zwei Einfädelnadeln vertikal auskragend und in Höhe und Länge versetzt angeordnet. Die Einfädelnadeln haben dabei eine Länge, dass sie über die Druckeinheit hinausragen. Die Einfädelnadeln sind dabei bevorzugt lösbar mit der Kippeinheit verbunden. Obenseitig haben die Einfädelnadeln Aufnahmemittel für Spannbänder, dies sind bevorzugt Öffnungen durch die die Spannbänder geführt werden.

In einer bevorzugten Ausführung sind auf der Ladefläche mittig zwei Einfädelnadeln in Länge und Breite versetzt angeordnet. Durch eine größere Anzahl an Einfädelnadeln können je nach Transportdauer und Anfälligkeit der zu transportierenden Bäume auch deutlich mehr Bäume fixiert werden.

Die Einfädelnadeln dienen zum Halten eines oder mehrerer Spannbänder während des Beladens mit den genetzten Nadelbäumen. Nach dem Pressen durch die Druckeinrichtung werden die Spannbänder aus den Aufnahmemitteln der Einfädelnadeln entfernt und miteinander verbunden. Dabei werden die Spannbänder außen um die arretierenden Holzleistenkonstruktion geführt, bevorzugt um Querträger der arretierenden Holzleistenkonstruktion. Dadurch werden im gekippten aufgerichteten Zustand die Nadelbäume, insbesondere die mittleren Nadelbäume in ihrer Position fixiert und in ihrer Höhe gehalten, womit der Druck auf die unteren Bäume wesentlich reduziert werden. Nach dem Fixieren der Christbäume werden die Einfädelnadeln einfach herausgezogen, bevorzugt beim Lösen der Palette von der Kippeinrichtung.

Durch die Fixierung der Bäume an der arretierenden Holzleistenkonstruktion ist auf kostengünstige Art und Weise und ohne einen wesentlichen Mehraufwand an Arbeitsleistung und Zeit die Gefahr von Transportschäden deutlich vermindert, indem ein deutlich geringerer Druck auf die unteren Bäume wirkt, und ein Verrutschen der Bäume untereinander verhindert ist.

### Ausführungsbeispiel

Die Erfindung wird nachfolgend anhand eines Ausführungsbeispiels näher beschrieben und in zugehörigen Zeichnungen dargestellt.

Es zeigen:
- Fig. 1:: Eine Vorrichtung zum Palettieren und Transportieren von genetzten Nadelbäumen in einer Kavaliersperspektive.
- Fig. 2:: Die Vorrichtung nach Fig. 1 in einer Seitenansicht ohne Seitenwände (5) sowie Palette (3).
- Fig. 3:: Die Vorrichtung nach Fig. 2 in einer Frontansicht der Stirnseite ohne Seitenwände (5) und Palette (3).

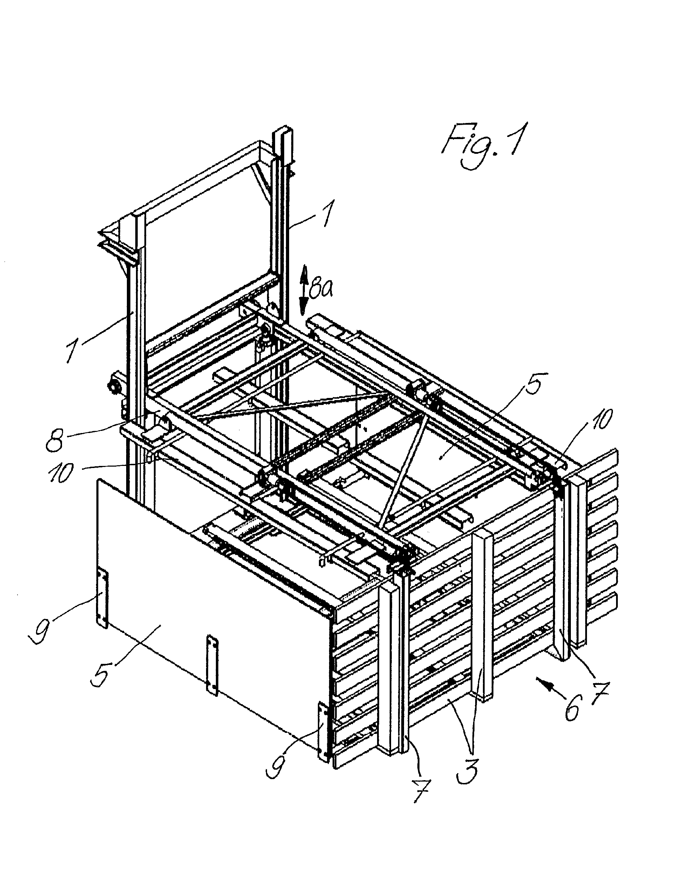

**Fig. 1** zeigt in einer stark schematisierten Darstellung den grundsätzlichen Aufbau der innovativen Vorrichtung zum Palettieren und Transportieren von genetzten Nadelbäumen. Die Vorrichtung wird als Baugruppe in Verbindung mit einem Tägerfahrzeug, wie einem Schlepper oder einem schweren Gabelstapler, eingesetzt.

Der Grundrahmen (1) ist als L-förmige Schweißkonstruktion ausgeführt. An der Stirnseite (6) der Vorrichtung ist eine senkrecht stehende Einweg-Palette (3) aus Holz sichtbar, die an den senkrechten Trägern (7) anliegt. Der axiale Abstand der beiden Träger (7) ist verstellbar, so dass die Träger (7) zugleich eine seitliche Lagefixierung der Palette (3) ermöglichen.

Die beiden aufgerichteten Seitenwände (5) dienen der seitlichen Fixierung der zu beladenden Christbäume. Die Seitenwände (5) sind durch jeweils drei winkelförmige Anschläge (9) mit der Ladefläche (4) verbunden. Die Anschläge (9) sind verschiebbar angeordnet und ermöglichen eine Veränderung des Abstandes der beiden, sich gegenüberstehenden Seitenwände (5). Die beweglichen Seitenwände (5) können zu Beginn der Beladung abgenommen werden, um das Beladen zu erleichtern. Die Seitenwände (5) weisen im aufgerichteten Zustand eine Höhe von 1500 mm auf, so dass die Beladung bei aufgerichteten Seitenwänden ohne Schwierigkeiten möglich ist.

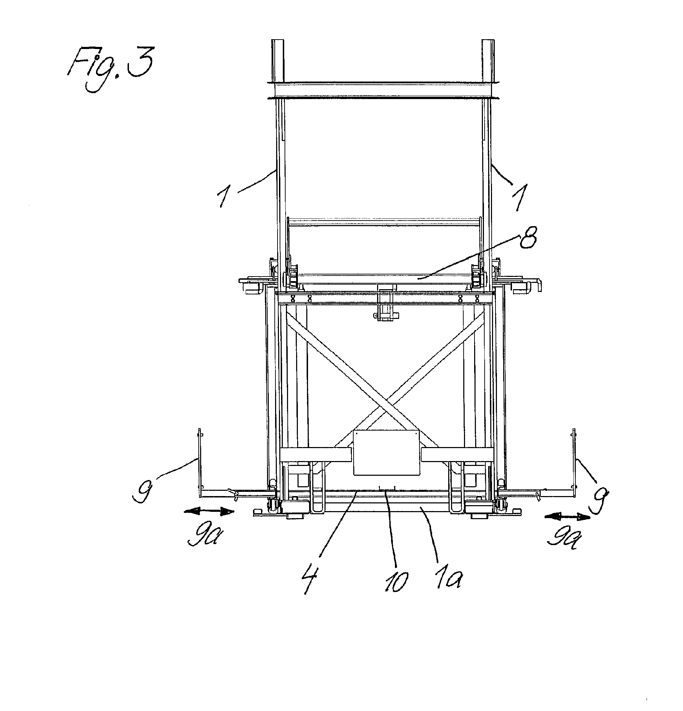

Die Druckeinheit (8) besteht aus einem geschlossenen Pressrahmen, dessen Spannbereich etwa der Ladefläche der Kippeinheit (2) entspricht. Die vertikale Verfahrbarkeit (8a) der Druckeinheit (8) wird durch nicht näher dargestellte Hydraulikzylinder realisiert, die den senkrechten Teil des L-förmigen Grundrahmens (1) mit dem Pressrahmen verbinden. Durch das vertikale Verfahren (8a) des Druckrahmens werden die, auf der Ladefläche aufliegenden und von den aufgerichteten Seitenwänden (5) arretierten Christbäume komprimiert. Nach Erreichen der gewünschten Packungsdichte wird das Ladegut durch eine Holzleistenkonstruktion arretiert. Dazu sind im bodenseitigen Bereich der Ladefläche (4) (siehe Fig. 3) und an der Unterseite des Pressrahmens der Druckeinheit (8) U-Profile als Führungen (10) angeordnet, die der Aufnahme der Holzlatten dienen.

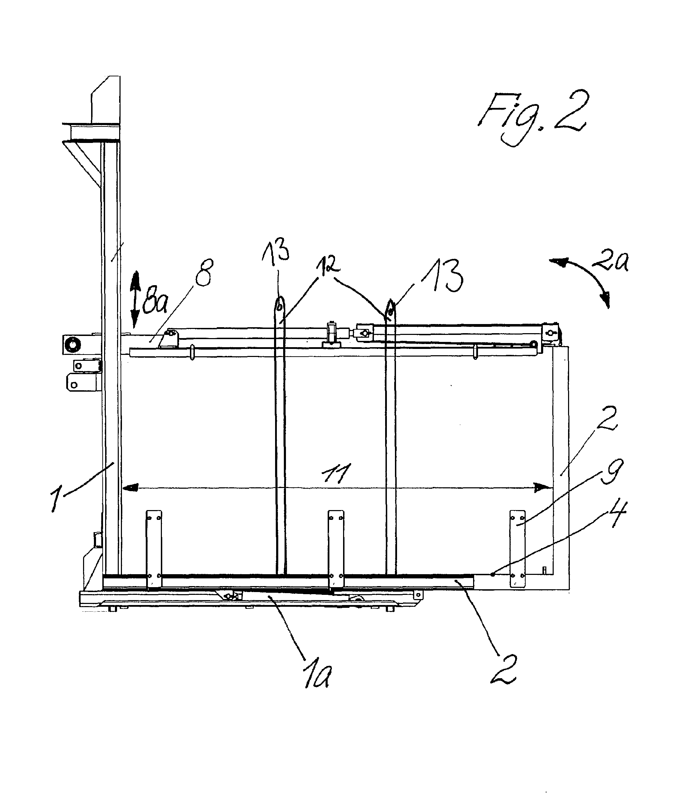

**Fig. 2** zeigt die Vorrichtung nach Fig. 1 in einer Seitenansicht. Zur besseren Übersicht sind die beiden Seitenwände (5) sowie die Palette (3) nicht eingezeichnet.

Der L-förmige Grundrahmen (1) trägt die Kippeinheit (2) und die Druckeinheit (8). Die Kippeinheit (2) umfasst die Ladefläche (4), die der Aufnahme der nicht eingezeichneten, genetzten Christbäume dient.

Die nicht eingezeichnete Seitenwand (5) ist lösbar mit den drei Anschlägen (9) verbunden. Die Druckeinheit (8) ist vertikal entlang des senkrechten Teils des L-förmigen Grundrahmens (1) verfahrbar. Dabei wird durch den Pressrahmen der Druckeinheit (8) das Volumen der eingelegten und eingenetzten Christbäume deutlich reduziert. Durch einen nicht näher dargestellten Druckkraftbegrenzer wird eine Beschädigung des Ladegutes verhindert.

Die Kippeinheit (2) ist an den äußeren Enden der Längsträger des waagerechten Teils des Grundrahmens (1a) schwenkbar gelagert. Durch die Schwenkbewegung (2a) der Kippeinheit (2) wird die darin fixierte (in Fig. 2 nicht eingezeichnete) Palette (3) aufgerichtet. Die Schwenkbewegung (2a) wird realisiert durch zwei (nicht dargestellte) axial beabstandete, zwischen den beiden Längsträgern des Grundrahmens (1a) angeordnete Hydraulikzylinder.

Weiterhin sind zwei Einfädelnadeln 12 mit der Kippeinheit 2 parallel zu der (in Figur 2 nicht gezeigten) Palette 3 im mittleren Bereich in der Länge 11 und Breite der Ladefläche 4 versetzt angeordnet. Dabei befinden sich zwischen den beiden Einfädelnadeln 12 zwei Querlatten der arretierenden Holzleistenkonstruktion. Obenseitig haben die Einfädelnadeln 12 Öffnungen 13 durch die ein Spannband geführt wird. Das Spannband wird dabei vor dem Beladen mit den eingenetzten Christbäumen durch die Öffnung 13 der ersten Einfädelnadel 12, von dort aus unter den beiden, zwischen den Einfädelnadelns 12 befindlichen Querlatten der arretierenden Holzleistenkonstruktion hindurch und von dort aus durch die Öffnung 13 der zweiten Einfädelnadel 12 geführt. Nach dem Beladen der Christbäume und dem Verpressen mit der Druckeinheit 8 ragen die Einfädelnadeln 12 aus dem Christbaumpaket über die Druckeinheit 8 heraus. Obenseitig befinden sich zwischen den Einfädelnadeln 12 ebenfalls zwei Querlatten der arretierenden Holzleistenkonstruktion. Nun wird das Spannband aus den Öffnungen 13 der Einfädelnadeln 12 entfernt und beide Enden über den Querlatten verbunden. Nach dem Kippen (Aufrichten der Palette 3) sind durch das Spannband die Bäume auf mittlerer Höhe arretiert wodurch die Druckbelastung der unteren Bäume (in der Näher der Palette) wesentlich reduziert werden kann.

**Fig. 3** zeigt die Vorrichtung nach Fig. 2 in einer Frontansicht der Stirnseite. Zur besseren Übersicht sind die Seitenwände (5) und die Palette (3) nicht dargestellt.

Die (nicht eingezeichneten) Seitenwände (5) sind beidseitig durch winkelförmige Anschläge (9) mit der Ladefläche (4) verbunden. Die Anschläge (9) sind axial verschiebbar angeordnet und ermöglichen eine Veränderung des Abstandes der beiden, sich gegenüberstehenden Seitenwände (5).

Im bodenseitigen Bereich der Ladefläche (4) ist ein U-Profil als Führung (10) angeordnet, das der Aufnahme der Spannmittel dient.

### Bezugszeichenübersicht

- 1: Grundrahmen
- 1 a: waagerechter Teil des Grundrahmens 1
- 2: Kippeinheit
- 2a: Schwenkbewegung der Kippeinheit 2
- 3: Palette
- 4: Ladefläche
- 5: Seitenwand
- 6: Stirnseite
- 7: Träger
- 8: Druckeinheit
- 8a: vertikale Verfahrbarkeit der Druckeinheit 8
- 9: Anschlag
- 10: Führung
- 11: Länge der Ladefläche 4
- 12: Einfädelnadel
- 13: Aufnahmeloch der Einfädelnadel 12

## Patentansprüche

1. Vorrichtung zum Palettieren und Transportieren von genetzten Nadelbäumen,
im Wesentlichen bestehend aus einem Grundrahmen (1),
der eine Kippeinheit (2) trägt, die das Schwenken (2a) und Aufrichten der befüllten Palette (3) ermöglicht,
wobei die Kippeinheit (2) eine Ladefläche (4) aufweist, die der Aufnahme der genetzten Nadelbäume dient,
wobei die Ladefläche(4) mindestens zwei bewegliche oder abnehmbare Seitenwände (5) aufweist,
und an einer Stirnseite (6) der Ladefläche (4) ein oder mehrere Träger (7) mit der Kippeinheit (2) verbunden sind, die der Aufnahme und Fixierung einer Palette (3) dienen,
dass der Grundrahmen (1) mit einer vertikal und/oder horizontal verfahrbaren Druckeinheit (8) verbunden ist, die beim vertikalen Verfahren (8a) die, auf der Ladefläche (4) aufliegenden und von den aufgerichteten Seitenwänden (5) arretierten Nadelbäume komprimiert.

2. Vorrichtung nach Anspruch 1,
**dadurch gekennzeichnet,**
**dass** der Grundrahmen (1) als L-förmige Schweißkonstruktion ausgeführt ist, wobei der waagerechte Teil des Grundrahmens (1a) im Wesentlichen aus zwei Längsträgern besteht, die durch mehrere Querträger miteinander verbunden sind.

3. Vorrichtung nach Anspruch 2,
**dadurch gekennzeichnet,**
**dass** die Querträger als Hohlprofile ausgebildet sind, in deren Hohlräumen kleinere, ausziehbare Profile verschiebbar eingebettet sind, die an ihren auskragenden Enden mit der Seitenwand (5) verbunden sind.

4. Vorrichtung nach einem der vorangehenden Ansprüche,
**dadurch gekennzeichnet,**
**dass** die Druckeinheit (8) im Wesentlichen aus einem Pressrahmen besteht, dessen Spannbereich etwa der Ladefläche (4) der Kippeinheit (2) entspricht und die vertikale Verfahrbarkeit (8a) der Druckeinheit (8) durch mindestens einen Hydraulikzylinder realisiert wird, der den Grundrahmen (1) mit dem Pressrahmen verbindet.

5. Vorrichtung nach einem der vorangehenden Ansprüche,
**dadurch gekennzeichnet,**
**dass** die Kippeinheit (2) am Grundrahmen (1), vorzugsweise an den äußeren Enden der Längsträger schwenkbar gelagert ist.

6. Vorrichtung nach einem der vorangehenden Ansprüche,
**dadurch gekennzeichnet,**
**dass** die Seitenwände (5) lösbar oder beweglich mit der Ladefläche (4) verbunden sind und/ oder schwenkbar, klappbar oder abnehmbar sind.

7. Vorrichtung nach einem der vorangehenden Ansprüche
**dadurch gekennzeichnet, dass**
an der Kippeinheit (2) mindestens zwei Einfädelnadeln (12) vertikal auskragend angeordnet sind, wobei die Einfädelnadeln (12) über die Druckeinheit (8) hinausragen und obenseitig Haltemittel für Spannbänder aufweisen.

8. Vorrichtung nach einem der vorangehenden Ansprüche,
**dadurch gekennzeichnet,**
**dass** die Seitenwände (5) aus mehreren, waagerecht übereinanderliegenden und untereinander gelenkig oder lösbar verbundenen Teilflächen bestehen.

9. Vorrichtung nach einem der vorangehenden Ansprüche,
**dadurch gekennzeichnet,**
**dass** Abstand der sich gegenüberliegenden Seitenwände (5) an die Länge der zu verladenden Nadelbäume einstellbar ist.

10. Vorrichtung nach einem der vorangehenden Ansprüche,
**dadurch gekennzeichnet,**
**dass** die Seitenwände (5) eine Höhe von 700 mm bis 1400 mm aufweisen.

11. Vorrichtung nach einem der vorangehenden Ansprüche,
**dadurch gekennzeichnet,**
**dass** die Ladefläche (4) der Vorrichtung eine Länge (11) aufweist, die der maximal zulässigen Ladeguthöhe des Transportmittels entspricht, mit dem die aufgerichteten Paletten (3) transportiert werden.

12. Vorrichtung nach einem der vorangehenden Ansprüche,
**dadurch gekennzeichnet,**
**dass** im bodenseitigen Bereich der Ladefläche (4) und/oder an der Unterseite des Pressrahmens der Druckeinheit (8) Führungen (10) oder Ausnehmungen angeordnet sind, die der Aufnahme von Spannmitteln, vorzugsweise von Holzlatten oder Spannbändern dienen.

13. Vorrichtung nach einem der Ansprüche 1 bis 12 für den Einsatz als stationäre Einrichtung in Baumschulen oder Forstbetrieben oder als Baugruppe in Verbindung mit einem flurgebundenen Trägerfahrzeug, vorzugsweise einem Schlepper, einem Traktor oder einem schweren Gabelstapler.
